# EUROPEAN PATENT APPLICATION

(11) **EP 3 079 103 A1**
(43) Date of publication of application: **12.10.2016**
(21) Application number: 14868052.3
(22) Date of filing: 27.08.2014
(51) Int. Cl.: G06K 19/07, G06K 19/02, G06K 19/08

(54) **ELECTRONIC SYSTEM FOR CONSULTING AND VERIFYING THE AUTHENTICITY, VALIDITY AND RESTRICTION OF DOCUMENTS USING PROXIMITY DATA READING TECHNOLOGY**

(30) Priority: 03.12.2013 BR 1331062
(71) Applicant: Ferreira De Souza, Antonio, 57037-630 Maceió (BR)
(72) Inventor: GOMES DE QUEIROZ, Júlia Lenita, CEP: 57037-630 Maceió, AL (BR)
(74) Representative: Antevski, Zlatko
(86) International application number: PCT/BR2014/000297
(87) International publication number: WO 2015/081396

(57) **Abstract**

Invention Patent for System of electronic query and verification of authenticity, validity and restriction of National Driving License (CNH), Vehicle Registration Certificate (CRV) and Vehicle Registration and Licensing Certificate (CRLV) using technology of data reading through approximation, which inhibits falsification, by inserting RFID or NFC tag, which will contain cadastral information, encumbrances, restrictions and photo of the vehicle or driver. This label, when approached to a reader, will allow this information to be viewed on a computer, portable player, tablet, smartphone, using application that will tell you if it is true the queried item. In addition to reading, the user can record a restriction or invalidation, with the latter option of revalidation, if you want, and send signal by voice, ideal for the visually impaired.

## Description

### BRANCH OF INVENTION

This invention patent belongs to the security technology industry of public documents, more specifically electronic security, to be used in electronic query and verification of authenticity, validity and restriction of National Driving License (CNH), Vehicle Registration Certificate (CRV) and Vehicle Registration and Licensing Certificate (CRLV) using data reading technology through approximation (hardware and embedded software).

### PRECEDENT OF THE INVENTION

One of the most important systems of contemporary society is about the transit system. On account of its complexity and magnitude, many problems must be addressed, particularly with respect to the regular documentation, both of the driver, and the vehicle moving daily. One of the major problems to be faced by the agencies of control is to fight against falsification of the National Driving License (CNH), Vehicle Registration Certificate (CRV) and Vehicle Registration and Licensing Certificate (CRLV), which involves a set of criminal cases often carried out by scammers.

The National Driving License (CNH) consists of an official document used to establish the suitability of a particular citizen to drive a land automotive vehicle and can even be used as an identity card throughout the country, and what makes it a document of vital importance.

The Vehicle Registration Certificate (CRV) is the document issued by the State Department of Transit (DMV), which has the function to set the property of a particular vehicle, and may be an individual or legal entity. It is through this document that the seller will formalize the authorization for the vehicle ownership transference.

Registration and Vehicle Licensing (CRLV) refers to the document issued on a yearly basis by the State Department of Transit (DMV) and which has the task of checking if that vehicle is meeting legal requirements.

It happens that, currently, a very precarious way of checking the authenticity and validity of the above listed documents is done in a very precarious way and depend almost exclusively on sensory and primitive methods, which all use security paper, equipped with some of the following techniques:
1. WATERMARK: is an image formed by differences in the thickness of a sheet of paper, applying a printed image on the sheet still damp. In CNH is present in the texts of identification;
2. COLORED FIBERS: Small threads spread on paper in red, blue and green colors, which can be seen on both sides, throughout the CNH;
3. EMBOSSED PRINTING (INTAGLIO): In the CRV and CRLV, is present in the stripe, as in the CNH, it is in the Republic Coat of Arms and in some texts such as "VALID THROUGHOUT NATIONAL TERRITORY";
4. SPECIAL BACKGROUNDS: They are formed by straight and sinuous lines, extremely thin, which give color to the document;
5. HOLOGRAPHIC STRIP: In the special case of CNH, at the bottom, there is a holographed horizontal strip, which has written "NATIONAL TRANSIT DEPARTMENT";
6. LATENT IMAGE: CNH has, on the underside, two rows of signatures for the holder and sender, comprising positive microtexts of the word "DENATRAN", as well as the acronym "CNH" on the side tracks of the document.
7. LUMINESCENT FIBERS: They are present in CNH, in the invisible fluorescent background artistically composed of Brazilian National Flag stylized with the texts "AUTHENTIC" and "NATIONAL TRANSIT DEPARTMENT"; geometric background incorporating two images of the Republic Coat of Arms; CNH acronym in positive and negative, printed with colorless dye, reactive to ultraviolet light with the appearance of edges in yellowness.
8. MICROCHANCELA: It is the signature of the issuer of the document, which is the Chief Executive Officer of the State Transit Department of each State;
9. NUMBERING: in the case of CNH, typographic sequential numbering with nine aligned digits, being the last digit verifier, module, DSR system, repeated in the upper and lower faces, printed with fluorescent black ink, which will present green fluorescence when subjected to the action of ultraviolet light. As to the CRV and CRLV, they have numbering of ten (10) digits in electronic printing by impact;

These are the techniques used to distinguish a true document from a fake. There is also a query made on the website of the National Transit Department (DENATRAN), where the user enters his CPF, the Registration Number and the CNH Security Code and the system will tell you if the number of this document is true or not.

This portal has some other systems, such as, the query for vehicle restrictions, where the user will enter the RENAVAN Code and the CPF of the vehicle owner and the system will provide some information to confirm about the authenticity of the document, such as plate of the vehicle, type, description, brand, model, power, and indicators of the vehicle situation, and they will show the existing restrictions, such as fiduciary alienation, existence of occurrence of robbery or theft, communication of sale, legal restrictions on motor vehicle - RENAJUD, interstate fine or notice to Recall.

Queries of financial constraints, encumbrances, RENAJUD are also very common on the websites of the various State Transit Departments, as well as queries to the situation (score, restrictions etc.) of the CNH.

There is also, in the case of CRLV, the use of a database, created by the Federal Highway Police, which is available over the internet, and it also informs whether that number has a theft record.

It happens that the methods described above, both the authenticity verification, and the restrictions, are very poor and do not prevent the crimes that have been causing damage and inconvenience to both the financial system, as the documents of false vehicles are used to contract bank financing, and the control agencies and to the public in general that, on occasion, has often been the victim of scams that come stamping the crime pages with much assiduity.

Verification of authenticity, as described above, will depend on the experience and sensitivity of those who analyzes, which should be very careful to check them, under penalty of being the victim of a scammer or allow a wrongdoer go ahead, in the case of police authorities.

Moreover, these printed techniques are only palliative, as the scammers often steal DETRAN's stations, probably, the CRLV before being filled, document known as a mirror, and falsify the vehicle, falsify the data using the stolen document in blank.

They falsify the chassis, change the plates and turn the vehicle into the called "goat". Soon after, they fill the stolen document with the cloned vehicle data and resell to other people, like a legalized vehicle.

By querying the document data in DETRANs, there is no complaint of theft because the data entered is a duly legalized vehicle, but CRLV, which consists of a printed document as original, is arisen from unlawful methods.

We should also note that, not always who analyzes such documents will be in a favorable situation. This is the case of the Federal or State Highway Police, for example that sometimes promotes road blocks in the middle of the road, where they need to check several documents in adverse situations (darkness, rain etc.).

We emphasize that the good analysis will depend also on the physical condition of the document. If CNH, for example, which is a document that is valid for five (05) years or so, be worn, scratched or torn, it will not provide security for decision on the authenticity.

Another factor that further complicates the perception by the user, especially the Police Officer, and misleads him, in an attempt to identify the authenticity of the above mentioned documents, is when they are repeatedly shown and in a short space of time, which makes an exhaustive activity, reducing the perception of quality and capacity analysis.

Regarding the query made to the database, the Police Officer or another user counts on a very large precariousness of access to information, as it will be dependent on data transmission means that are not always available, namely, the internet or a telephone line because in some very remote places, these services are still lacking.

Therefore, the Supervisory Agent will make the random approximation and will take the vehicle document (CRLV) and the driver's CNH and he will have to move to a nearest computer, enter all the information, to only then have an answer that will support the reasonable decision making.

Or, in a worse case, he should get in touch by telephone with the central and report the data to get the answer to his query. All this takes time and eventually causes stress, both to the Supervisory Agent, and to the citizen who is awaiting the query.

If the citizen has committed any violation, the Supervisory Agent shall draw up a Notice of Infraction, manually, in three copies (one for the driver, one will stay with him and the other for the regulatory agency) and shall send this Notice to be processed along with the regulatory agency, which only after a long time, will enter the restriction (scoring in CNH, for example) or information of a given violation on the web, or even the updating of the CRLV stolen list, available on the website of the Federal Highway Police.

With regard to the websites that perform a check by the numbering of the document (CNH CRLV or CRV), these have an uncertainty that is a citizen encounter a cloned document, since, as above mentioned, the scammers steal documents in blank from the Transit Departments, insert the data of a legalized vehicle that when queried, will not indicate any problem.

Without also mentioning that the current system does not have resources for accessibility of visually impaired, whether ordinary citizens or Regulatory Agent, which will rely on third parties to report on the authenticity, validity and existence of restrictions in the analyzed documents.

Regarding the regulatory agent, the current system has gaps, where he has the power to decide whether to apply the penalty or not in the case of expired CNH or CRLV. That is, despite the legal duty to fine irregular driver, the agent has the possibility to prevaricate, in egregious cases of corruption, as time and again, is reported in the media.

### USE OF THE INVENTION

Based on the above, in order to meet the needs of society, which claims for security in conducting negotiations, we present the resolution of the problems above mentioned, the use of a system, which uses the association of advanced technologies, especially integrated, which will aim to carry out the electronic query and verification of authenticity, validity and restriction of the National Driving License (CNH), Vehicle Registration Certificate (CRV) and Vehicle Registration and Licensing Certificate (CRLV), through technology of data reading through approximation, in particular NFC and RFID.

With the use of this system, you can perform the verification of the National Driving License (CNH), Vehicle Registration Certificate (CRV) and Vehicle Registration and Licensing Certificate (CRLV) in order to verify its authenticity, validity and restriction, in addition to store immediately other information, such as the violations in the traffic (which will perform the legal procedures until becoming negative in fact), and it will prevent that the bureaucratic delays undermine the right information of a certain document of that user, bringing more security and integrity for all involved.

This system will facilitate the query of that Regulatory Agent, or user (usually lay), which shall analyze various documentation in a short period of time without making use only of the physical structure of the paper to conclude whether that document is false or not, or without the necessity he has to move to a computer with internet access, or spend time making a phone call to the Manager Agency in order to get information about that documentation (whether CNH, CRV or CRLV).

This system will solve, including, the connection problem, as the fixed or portable readers that there are on the market make use of various different technologies such as, for example, logical network UTP, USB, internet via radio, mobile connection, GPRS, GSM , Wi-Fi, Bluetooth, and GPS location, not being the user or, especially, the Regulatory Agent restricted to the access to a desktop computer, nor will be forced to move to make the query.

With the same applicability, this system will be the solution to ordinary users and any person who is visually impaired, which may perform queries, regardless of the location in which they are, using to this, the portable reader equipped with the solution and application to be described below, or smartphone, tablets, etc. which are equipped with the technology, once it will inform, by visual signal on that query.

Another very important factor is that, with the new system, the chances of finding a stolen vehicle are increased or that it is being used by thieves for criminal purposes, once the system will already indicate if there is any restriction, in addition to show on the computer screen, smartphone or portable reader the photo of the vehicle, which prevents cloning plates. Moreover, even if the restriction is not in the database, the police will grant to know where a particular vehicle has transited through query records that will be recorded in history.

The same occurs in relation to the driver of the vehicle, whose CNH will be queried and the registration will be available, and the police may have knowledge where they were queried, which will be of great value, for example in cases of people being kidnapped and that are under the control of thieves, and can even be recorded a report on that CNH to, when it is queried, may indicate the incident and alert the police authority to act, since, normally, the citizen is forced, by the wrongdoer, to pretend that nothing is happening .

The use of this technology brings transparency, security and agility in operations and development of proceedings of the entities involved, thus generating benefits and gains, for today saving time means the opportunity to undertake it in other activities with various remuneration.

On the other hand is to be noted that there will not be huge losses and embittered disorders today by the population and by the controlling agencies with the various existing delinquent actions, including by the regulatory agent, once having queried the expired CNH or CRLV, will be unable to refrain from the application of appropriate penalties, as the system itself, automatically, will have recorded the irregularity, being only possible the option to justify in exceptional cases, for example, when the vehicle is with the paid guides, but the updated CRLV has not been delivered yet.

The system proposed here is arisen from a complex combination of technological and nanotechnological electronic devices, optical and radio frequency readers, software, applications and two-way communication system that enable the realization of the above solutions.

### BRIEF DESCRIPTION OF DRAWINGS

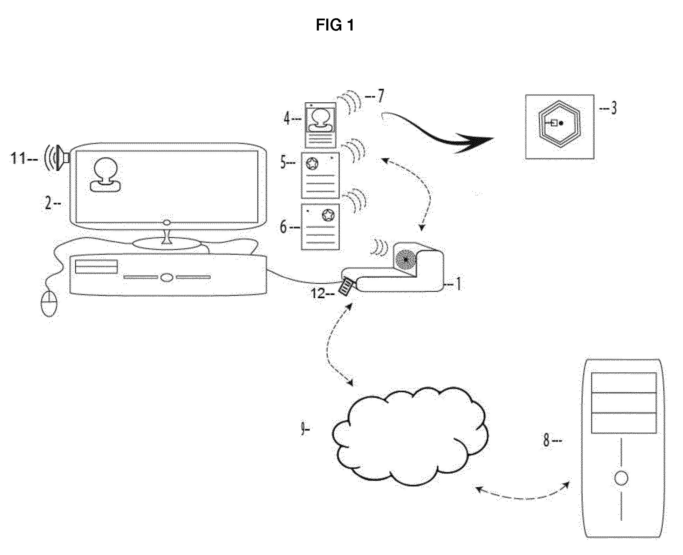

Photo 1 shows the first stage of the system, where the agency in charge will insert the information (and also carry out the reading, later) through the fixed reader, coupled to the computer, in the existing tags on CNH CRV and CRLV, through radio frequency waves with identification, through approximation. This computer will share the information with the central server via Internet, which will feed the various systems that are connected to it, for example, RENAJUD. Subsequently, the query result will be shown on the computer screen, where you will see a photo of the vehicle or driver, depending on the document to be queried, along with the relevant information, in addition to be printed the report of the proceedings. The query result can be informed via audio (voice message) previously enabled, for accessibility of those who are visually impaired.

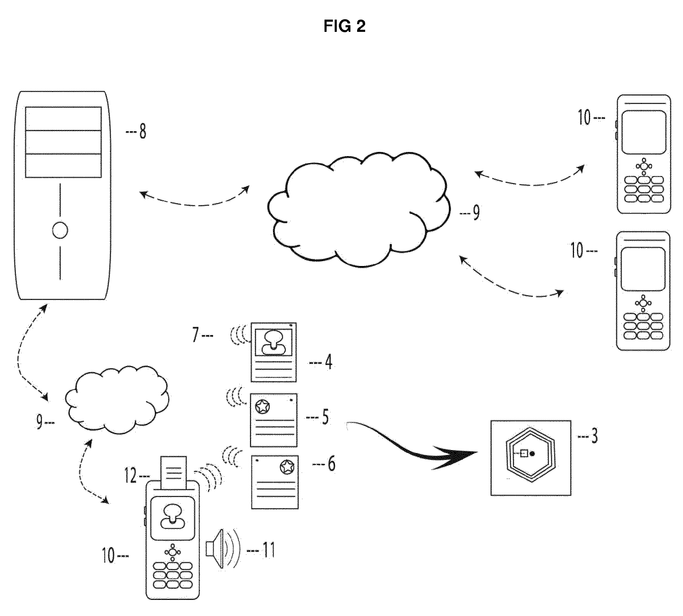

Photo 2 represents another stage of the control system, where the central server will feed mobile readers through the internet, to be used by police officers in road blocks, with prior information on the status of the documents. These mobile readers will be able to query the documents CNH, CRV or CRLV, through radio frequency waves with identification (data reading technology through approximation), or in conjunction with the internet, when possible.

At the time of reading, the screen of the mobile reader will show, as well as in other readers, the photo of the driver, in the case of query with CNH, together with the data and restrictions. In the case of query with CRV or CRLV, the mobile screen of the reader will show the data, restrictions and the photo of the queried vehicle. The query result can be informed via audio (voice message) previously enabled for accessibility of those who are visually impaired. If necessary, the police officer can record comments / restrictions on the tags of the documents, which will be immediately passed on to the central or when on line, later. The report of the procedure can be printed if necessary.

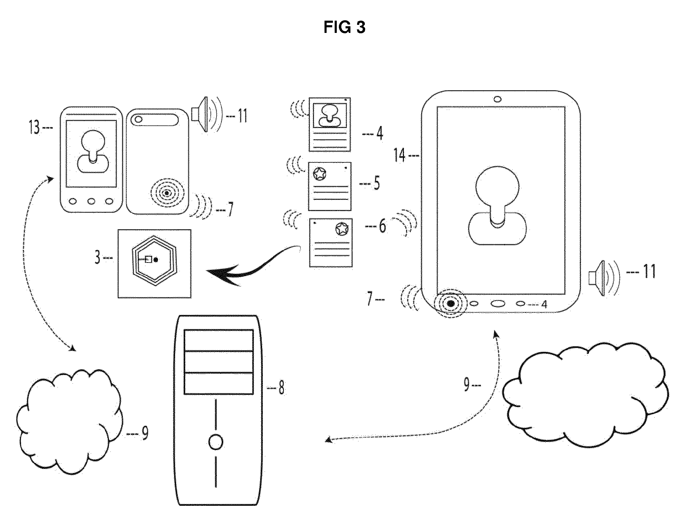

While in Photo 3, shows that the ordinary citizen can also use the system through his tablet or smartphone which bears the NFC technology and specific application, using only the data reading technology through approximation or even a further query, using internet support, which will communicate with the central server database. He can perform the document query, whether CNH, CRV or CRLV and will know if it is true, if there are restrictions or encumbrances, fines etc. The query result can be informed via audio (voice message) previously enabled for the visually impaired accessibility and shared by the available media.

### DETAILED DESCRIPTION OF THE INVENTION

The key concepts here used to develop embedded systems begin by demystifying hardware, diversity of components, interfaces and communications we use. Following comes the development of firmware and the digital signal processing, supporting digital filter design and audio and image applications. The solution comes in a very practical way to its purpose, with the demonstration that we use below.

Before starting the demonstration of the project itself, it is important to have a basic idea about the working principle of a reading data system through approximation, such as RFID and NFC: it is basically composed of a reader and a transponder (or tag, label).

This reader consists of a radio frequency transceiver that operates in one of the standard frequencies for this type of application (125 kHz, 13.56 MHz, 862 to 932 MHz or 2.4 GHz).

On the other hand, we have a transponder (tag), which will respond to commands from the reader. There are three technologies for the use of transponders: passive (they do not have integrated power supply) and that is our case; semi-passive (they have an integrated power source only to feed the receiving stage); and active (they have an integrated power source and an active transmission circuit, which ensures a much greater scope for realization of the reading).

The operation will happen from the installation of an electronic device with radio frequency and optical sensor and with local management through applications, on PCs, query mobile terminals, tablet or smartphone. In the latter case, there will be an embedded reader on the device itself under the term Near Field Communications - NFC and with properties of integration based on data in a remote location, which through two-way communication will provide prompt response to the information requested for the necessary actions to achieve the purpose for which it is intended, as described above.

Thus, the system starts in the regulatory agency, which issues the document, which is the State Transit Department - DETRAN, which will record, through the fixed reader on the implanted tags in the documents file and other relevant information. To be recognized by the readers, the documents of the vehicle (CRV and CRLV) and driver (CNH) necessarily, will be equipped with a microelectronic tag, with readable properties through approximation, usually RFID or NFC. As these labels, during the approximation, are fed by the readers themselves, without the need for batteries that need to be recharged, RFID / NFC is powered by the magnetic field issued by the reader. RFID / NFC tags transfer information back to the reader using this magnetic field, which is detected by the reader as a variation in the field. Thus, every object carrying these tags can store specific and private information, making them unique and with its own identity and without risk of being copied.

In this solution, there will be the insertion, in the documents, of a tag, RFID / NFC between of low frequency, between 125 kHz and 13.56 MHz, with reduced physical dimensions, which is barely perceptible to the naked eye, flexible, composed by a microcontroller chip and antennas that allow communication with the reader.

Thus, our solution consists of fixed reader that connects to your computer via USB port. The USB port is a means by which the microcontroller or PC can use to communicate with the outside world and is a serial interface of high-speed, reaching transfer rates of up to 480 MB / sec.

This reader makes a query of CNH, CRLV or CRV disposed at a distance from 0 to 10 centimeters, when it fires a beam of radio frequency waves. This condition is also offered for portable readers (mobile), which are available in the market such as smartphones and tablets that already have many resources now required, needing only integration in some of these, of the RFID reader / NFC and its applications of query and management.

At this time, when receiving this stimulation, the RFID / NFC tag inserted in the object, will respond providing to the reader, its whole identity content and this, in turn, will provide such information to the application that, instantly, will make the search of its current condition, instantly returning, or a posteriori, depending on the connection, the confirmation and providing the operability options and other actions.

If the computer is not with internet access at the time, the query of the restrictions and authenticity will be made on a pre-existing database in memory of the local computer or readers. After the connection reestablishment data will be shared and compared with the central server database.

It is important to emphasize that the answer to the performed query, when showing the data on the computer screen, the photo of the driver will also appear, if the query is related to CNH or the photo of the vehicle, in case of query of CRV or CRLV.

If there is any information or restriction to be recorded on that document and on the central server, it can be done immediately, if there is an Internet connection available, or may be recorded only in the document for later communication with the central server.

In the case of mobile portable readers, ideal for use in road blocks, for example, when placing the document on RFID / NFC reader, the query process will begin, when this will request to the central server database, information about the queried objects, via the internet, and make use of alternative mobile technology if there is no Wi-fi on site.

Similarly the fixed reader will appear, as a response to the query, immediately, both the data (authenticity, restrictions and other information) and the photo of the vehicle referring to the CSRC or CRLV or photo of the driver, referring to CNH, on the screen of the portable reader.

However, in case of query performed in very remote location, where there is not access to the internet, there will be only possible the automatic query of authenticity and possible notes of encumbrances, restrictions etc. of the vehicle or driver, previously stored in the internal reader database, since it is made solely by the reading data technology through approximation, not necessarily the query to the central server without the immediate need for internet. In this case you do not have access to images or photos due to limitation of the internal database.

Following the same system, if any information or restriction to be recorded in the customs house, traffic police battalions, patrolling central or traffic agents in that document and the due share to the central server, it can be done immediately if there is connection internet available, or may be recorded only in the document for later communication with the central server.

The ordinary citizen will not go out of this whole process, as he can query, in the same way, the documents in question, through unofficial readers, like his smartphone or tablet, provided he has available the technology. In the case of query through unofficial readers, it will be not possible the recording of restrictions, but only observations, which will be moderated by the competent agency.

In the three opportunities brought, the query process will be given by the approximation of the document to be queried to a maximum distance of centimeters from the radio frequency reader, whose result can be printed, as well as any fines and advisory notices, or even shared by digital media.

Such readers will be classified into at least three different models:
1. Desktop Reader (fixed on the table): it will be available by the traffic controlling agencies to patrol stations and road inspection. These equipment will enable, beyond the reading for the query, the visualization of data in an own monitor, basic printing of occurrence as well as the inclusion of new information in the queried document, because it can be online through the various means of connectivity that they offer such as: logical network UTP, USB, internet via radio, mobile connection, GPRS, GSM, Wi-Fi, Bluetooth, and GPS location. Equipped with internal memory for storage of a database with registration of the users of the system, it also has slot for memory card for backup as well as expansion of its storage capacity in case of lack of connectivity, as mentioned above. In addition to the reading device, a photographic device integrates this robust equipment, enabling the recording in photo of the queried documents.
2. Mobile portable player: this will be used by agents in mobile or external inspections where there is need for mobility, but that offers all the conditions of obtaining such information from the queried objects, as well as the possibility of decisions and, when appropriate, the application of penalties, with online registration of these actions. This device will have all the functions described above, but with smaller dimensions, because it will allow its handling and transportation to the approach stations. However, its connection will be limited to the mobile connectivity means above described, living up to its purpose. If there is no means of online connection available, memory cards with data from the system will provide the necessary information, as described above.
3. Common Portable Readers: Smartphones and Tablets are the third option and they aim to popularize the use of the system in a more comfortable and safe way, since, in addition to the above-mentioned agents, the entire population will be able to query such documents through unofficial readers, such as a tablet or smartphone device, since various manufacturers already have, in some models, devices equipped with radio frequency reader through approximation (NFC). As the functions are for consultation only, this device will contain in its internal memory a particular application with a database of content and restricted functions. However, the connectivity model, in addition of being compatible with the previous item, even enables the receipt of the query result by means of SMS and e-mail previously registered, if there is interest.

The readers described above will be responsible not only for query, but also by collecting information from all the current documents, because even if the document still does not have the electronic label, the application will allow the insertion of the data from the document and after the activation of the icon, query data, these will follow for an analysis of the database of the manager agency and will provide the result instantly being arranged on the monitor of the unit by providing, thus, subsidy for decision-making of the people involved.

Thus, the readers assume a position of interconnection link between traffic controller agencies, inspection agents, population and other users. This technology in addition to ensure the authenticity of the documents of this segment, optimizes and gives agility to processes, avoiding the loss of a lot of time on paperwork, that raise the cost of certain operations.

It is worthy to highlight that will be registered in the history of that document all queries held, whether through official, portable or fixed readers, or through unofficial readers (ordinary people), which will allow the easy location of stolen vehicles or used in crimes or of people who are being sought, as already mentioned earlier.

Similarly to what happens when you query a CPF or CNPJ, which relies on a response from a major provider, and that provides data on the queried documents, we will also have this control, but with a larger amplitude, because every label produced anywhere in the world, has its own identity and specific characteristics.

The procedures from the deployment of this solution, will have significant change, because all transactions and decision-making about a given situation, whether by individuals, either by inspection agents, will be safer, once both the driver and the vehicle, can be adequately controlled with this revolutionary solution.

## Claims

1. System for electronic query and verification of authenticity, validity and restriction of National Driving License (CNH), Vehicle Registration Certificate (CRV) and Vehicle Registration and Licensing Certificate (CRLV), using technology of data reading through approximation, **characterized by** inserting a tag of Radio Frequency Identification - RFID or Near Field Communication - NFC, containing information that will be collected through a reader of RFID / NFC tags, connected to a computer through an USB cable, which will read the labels, causing the spread of RFID / NFC waves on labels-sensors inserted in CNH, CRV or CRLV, instantly providing to the operator or user, after due verification in a local database or central, on the screen in the field itself or by voice message, the search result with identification of authenticity, restrictions, encumbrances, among others, which will be shown on the computer screen, where you will see a photo of the vehicle or driver, depending on the document to be queried, along with the relevant information. There is the option of performing the recording of this information in the document and on the central server. This information may be shared with remote databases of interest of the user institution, through the network media, Internet, GSM, GPRS, GPS, SMS or even printed.

2. System in accordance with claim, **characterized by** the power of mobile readers, ideal for use by police officers in road blocks, with prior information on the status of the documents. These mobile readers will be able to query CNH, CRV or CRLV documents, through radio frequency waves with identification (technology of data reading through approximation), or in conjunction with the internet, when possible. At the time of the reading, on the screen of the mobile reader will appear, as well as in other readers, the photo of the driver, in the case of query to CNH, together with the data and restrictions. In the case of query to CRV or CRLV, will appear on the screen of the mobile reader the data, restrictions and photo of the queried vehicle. The query result can be informed via audio (voice message) previously enabled, for accessibility of those who are visually impaired. If necessary, the police officer can record comments / restrictions in the tags of the documents, which will be passed on to the central immediately or when online, later, as well as perform the printing of this result.

3. System in accordance with claim, **characterized by** the query via tablet or smartphone which provides the NFC technology and specific application, only using the data reading technology through approximation or even further query, using support from the Internet, which will communicate with the central server database. It can perform the document query, whether CNH, CRV or CRLV and it will know if it is authentic, if there are restrictions or encumbrances, fines etc. The query result can be informed via audio (voice message) previously enabled, for the visually impaired accessibility and shared by digital media. The observations recording depend on the moderation of the inspection agency.
